# EUROPEAN PATENT APPLICATION

(11) **EP 4 796 201 A1**
(43) Date of publication of application: **26.08.2026**
(21) Application number: 26156762.2
(22) Date of filing: 06.02.2026
(51) Int. Cl.: B01D 46/10, B01D 46/42, B01D 46/52, B01D 46/00

(54) **FILTER ELEMENT AND METHOD FOR MANUFACTURING A FILTER ELEMENT**

(30) Priority: 19.02.2025 DE 102025106194
(71) Applicant: MANN+HUMMEL LIFE SCIENCES & ENVIRONMENT HOLDING SINGAPORE PTE. LTD., Singapore 139234 (SG)
(72) Inventor: PRICE, Andrew, 139234 Singapore (SG)
(74) Representative: Mann + Hummel Intellectual Property

(57) **Abstract**

The invention relates to a filter element (100), in particular an air filter element, at least comprising a filter media pack (10) with folded pleats (14) of a filter medium (12), a frame (30) enclosing the filter media pack and comprising two opposing side components (32, 34). Electrically conductive corrugated separators (50) are placed between adjacent pleats (14) of the filter media pack (10). An electrically conductive sheet (52) is placed on an inner side (42, 44) of at least one of the side components (32, 34). The separators (50) are in electrical contact with the sheet (52) of the at least one side component (32, 34). An earthing wire (60) is electrically connected to each sheet (52).

The invention further relates to a method for manufacturing a filter element (100).

## Description

### Technical Field

The invention relates to a filter element, in particular air filter element, as well as a method for manufacturing a filter element.

### Background Art

Air filtration systems used in hazardous environments must meet strict safety standards, such as the so-called ATEX (Atmosphères Explosives) certification of the European Union, to ensure they do not pose an ignition risk. Conventional deep pleat air filters, while effective at particle filtration, often fail to address the challenges of static discharge, thermal stability, and mechanical integrity required for ATEX compliance.

WO 2021/185477 describes a deep pleat filter element for separating oil aerosol particles from raw gas. The filter element comprises a filter medium folded multiple times, one longitudinal face of each of the filter medium folds forming the dirty side of the filter medium folds and the other longitudinal face of each of the filter medium folds forming the clean side of the filter medium folds, at least one spacer, which in each case is assigned to one fold of the filter medium and is designed to space apart the longitudinal faces of this fold, and at least one frame for receiving the filter medium with the spacers integrated in the folds of the filter medium.

### Disclosure of the Invention

It is an object of the invention to provide an improved filter element, in particular an air filter element.

Another object is to provide a method for manufacturing an improved filter element.

According to an aspect of the invention, the object is achieved by a filter element comprising a filter media pack with folded pleats of a filter medium, a frame enclosing the filter media pack and comprising two opposing side components, being closed by a top component and a bottom component opposite to the top component, wherein electrically conductive corrugated separators are placed between adjacent pleats of the filter media pack from an upstream and/or downstream side of the pleats, provided for a uniform spacing of adjacent pleats, wherein an electrically conductive sheet is placed on an inner side of at least one of the side components, wherein the separators are in electrical contact with the sheet of the at least one side component, wherein an earthing wire is electrically connected to each electrically conductive sheet.

According to a further aspect of the invention, another object is achieved by a method for manufacturing a filter element, the method comprising placing an electrically conductive sheet on an inner side of one or both of two side components of a frame; providing a filter media pack with folded pleats of a filter medium; placing electrically conductive corrugated separators between adjacent pleats from an upstream and/or downstream side of the pleats, provided for a uniform spacing of the pleats; placing the filter media pack upon a side component (32, 34) of the frame comprising the sheet, so that the separators (50) are in electrical contact with the sheet; adding the second of the two side components to the frame, if the second side component (32, 34) comprises a sheet (52), placing the separators in electrical contact with the sheet of the second side component; attaching an earthing wire to each sheet at least at one end of the filter media pack.

Advantageous embodiments are described in the dependent claims, the description and the drawings.

A filter element, in particular an air filter element, is proposed, at least comprising a filter media pack with folded pleats of a filter medium, a frame enclosing the filter media pack and comprising two opposing side components, being closed in a rectangular shape by a top component and a bottom component opposite to the top component. Electrically conductive corrugated separators are placed between adjacent pleats of the filter media pack from an upstream and/or downstream side of the pleats, provided for a uniform spacing of adjacent pleats. At least one electrically conductive sheet is placed on an inner side of at least one of the side components, covering a full length of the side component, the sheet being affixed to the at least one of the side components, respectively. The separators are in electrical contact with the sheet of the at least one side component. An earthing wire is electrically connected to each electrically conductive sheet at least at one end of the filter media pack.

The invention may be used in potentially explosive environments. Typically, environments with potentially explosive atmospheres can be found in chemical plants, oil refineries, and pharmaceutical facilities. Therefore, the invention may relate to air filtration technology, specifically to ATEX-certified deep pleat air filters for use in such environments with potentially explosive atmospheres.

The proposed filter element integrates these safety features while maintaining high filtration efficiency and durability.

Since the earthed electrically conductive sheet is in electrical contact with the corrugated separators, there is advantageously no need to solder earthing wires individually to each corrugated separator. Soldering is time consuming and costly. Furthermore, the soldered joints may be a point of failure during operation. Additional conductive materials, such as conductive glue, may advantageously not be required. Conductive particles in such glue may migrate or settle unevenly over time, leading to inconsistent conductivity. Such materials often have reduced shelf life and their disposal may pose environmental challenges. Thus, the proposed filter element can be manufactured at a low cost. Additionally, the electrically conductive sheet may advantageously provide secure contact-based conductivity with a solid and consistently conductive material, to transmit electrical charges from conductive parts of the filter element, such as the corrugated separators, to the earthing wire.

An electrically conductive sheet or at least one electrically conductive sheets may be provided on a side component. Alternatively, both side components may each be provided with an electrically conductive sheet or at least one electrically conductive sheets. The electrically conductive sheet may be of a length that covers a full length of the respective side component. The sheet may be affixed to the respective side component to ensure consistent contact with the corrugated separators. The high surface area of the electrically conductive sheet used to achieve the conductivity greatly reduces the risk of failure. Production costs for manufacturing the filter element may be reduced.

The side components, top component and bottom component of the filter frame may enclose the filter media pack in a quadrilateral shape, such as a rectangular shape. The filter frame may be constructed from a number of materials, including but not restricted to galvanized steel, aluminum or stainless steel. The frame may be coated with an anti-corrosive and conductive finish. Integrated grounding terminals are added to dissipate any residual static electricity.

The corrugated separators are favorably oriented in a way between the pleats that fluid channels are formed along an insertion direction of the separators, tips and valleys of the separators leading from the first frontal side to the second frontal side of the filter media pack.

The separators may be individually tested to ensure that the maximum measured continuity resistance does not exceed 1 Ohm to ensure safe dissipation of static electricity. If issues are found, these can be easily repaired by adjusting the alignment of the separator.

According to a favorable embodiment of the filter element, the separators and/or the sheets may comprise aluminum. In particular the separators and/or the sheets may be made from aluminum sheets. Aluminium is a material which is easy to form. Despite, Aluminium exhibits a high electrical conductivity, therefore being highly recommendable for earthing applications.

According to a favorable embodiment of the filter element, the sheet may be formed like a separator. In particular, the separators and/or the sheets may be sinusoidally corrugated or folded in a zigzag shape. Corrugated separators facilitate maintaining a uniform spacing between the pleats of the filter medium. Corrugated sheets are advantageous for mechanically and electrically connecting separators and sheets.

According to a favorable embodiment of the filter element, a length of the corrugated separators may extend beyond a width of the pleats at a side edge of the filter media pack corresponding to the side where the at least one electrically conductive sheet is placed, wherein the separators may be placed in such a way that the separators protrude from the side edge of the filter media pack. The protruding end of the separator may increase contact with the electrically conductive sheet. Where the electrically conductive sheet is sinusoidally corrugated, the protruding end of the separator may be placed in a valley of the sinusoidal corrugation of the sheet. The protruding end of the separator may overlap with the electrically conductive sheet. Where the electrically conductive sheet is sinusoidally corrugated, the sinusoidal corrugations of the protruding end of the separator and those of the sheet may lay in conjunction with each other. The protruding end of the separator may be an overhang.

According to a favorable embodiment of the filter element, an overhang of a separator may be greater than a distance between the separator and the adjacent next separator. This causes each bent separator end to not only overlap with the electrically conductive sheet, but also overlap with the next separator. As such, all separators may advantageously touch at least the sheet and one adjacent separator throughout the depth of the filter media pack. Overlapping separators may facilitate electrical connections between separators and/or sheets.

According to a favorable embodiment of the filter element, the overhang may be folded towards the next adjacent separator. Thus, a reliable electrical connection between separators and/or sheets may be established.

According to a favorable embodiment of the filter element, the earthing wire may be welded to each electrically conductive sheet at least at one end of the filter media pack. A reliable grounding concept for the filter element may be achieved.

According to a favorable embodiment of the filter element, the earthing wire may be routed to a ground terminal integrated into the frame. In particular, the ground terminal may be integrated into the side component where the electrically conductive sheet is placed. The ground terminal may then be separately earthed. Thus, a continuous electrostatic discharge path may be ensured.

According to a favorable embodiment of the filter element, a sealant may be arranged at the inner side of the side components, at least covering the corresponding sheet and side edges of the pleats. The sealant may comprise a polyurethane sealant or other known sealants, such as an ethylene vinyl acetate sealant. The sealant may comprise a two-way sealant. Thus, all components may be affixed in place, ensuring a high level of safety and durability. After the polyurethane has set, the separators and/or sheets may be tested to ensure compliance with the required maximum resistance levels.

Further, a method for manufacturing a filter element is proposed, the method comprising placing an electrically conductive sheet on an inner side of one or both of two side components of a frame; providing a filter media pack with folded pleats of a filter medium; placing electrically conductive corrugated separators between adjacent pleats from an upstream and/or downstream side of the pleats, provided for a uniform spacing of the pleats; placing the filter media pack upon a side component of the frame comprising the sheet, so that the separators are in electrical contact with the sheet; adding the second of the two side components to the frame; if the second side component comprises an electrically conductive sheet, placing the separators in electrical contact with the sheet of the second side component; attaching an earthing wire to each sheet at least at one end of the filter media pack.

As mentioned above, the invention may be used in potentially explosive environment, for example in environments with potentially explosive atmospheres, such as those found in chemical plants, oil refineries, and pharmaceutical facilities.

The innovative manufacturing method for the filter element integrates these safety features while maintaining high filtration efficiency and durability.

An advantage is the low cost and secure contact-based conductivity provided by the electrically conductive sheet to ensure a continuous electrostatic discharge path. As the electrically conductive sheet may be in the form of a corrugated separator, the manufacturing process may be simplified.

At least one electrically conductive sheet may be provided on one or both side components. The sheet may be affixed to the respective side component. The high surface area of the electrically conductive sheet used to achieve the conductivity greatly reduces the risk of failure and the manufacturing method for producing the filter element improves production speed and reduces health and safety risks relating to soldering activities.

Advantageously, costs and speed of manufacturing may be improved compared to manufacturing filter elements according to state of the art. Further advantages are a certainty of conductivity and a mitigation of failure due to the proposed manufacturing method.

Where the corrugated separators protrude from a side edge of the filter media pack corresponding to where the electrically conductive sheet is placed, the method may further comprise folding an overhang of the separators into the corresponding electrically conductive sheet.

The filter frame may be constructed from a number of materials, including but not restricted to galvanized steel, aluminum or stainless steel. The frame may be coated with an anti-corrosive and conductive finish. Integrated grounding terminals are added to dissipate any residual static electricity.

The separators may be individually tested to ensure that the maximum measured electrical continuity resistance does not exceed 1 Ohm to ensure safe dissipation of static electricity. If issues are found these can be easily repaired by adjusting the alignment of the separator.

According to a favorable embodiment, the method may further comprise routing the earthing wire to a ground terminal integrated into the frame, in particular, integrated into one of the side components. Thus, a continuous electrostatic discharge path may be ensured.

According to a favorable embodiment, the method may further comprise arranging a sealant at the inner side of the side components, at least covering the corresponding sheets and side edges of the pleats. Thus, all components may be affixed in place, ensuring a high level of safety and durability. After the polyurethane has set the separators and/or sheets may be tested to ensure compliance with the required maximum resistance levels.

### Brief Description of the Drawings

The present invention together with the above-mentioned and other objects and advantages may best be understood from the following detailed description of the embodiments, but not restricted to the embodiments, wherein is shown in:
- Figure 1: a filter element, in particular an air filter element, according to an embodiment of the invention, in an isometric view from a first frontal side;
- Figure 2: an exploded view of the filter element according to Fig. 1;
- Figure 3: an exploded view of the filter media pack with the separators and sheets;
- Figure 4: a sectional view of separators connected to a sheet; and
- Figure 5: a detailed view of part of the filter element according to Fig. 1 from a second frontal side.

### Detailed Description of the Drawings

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

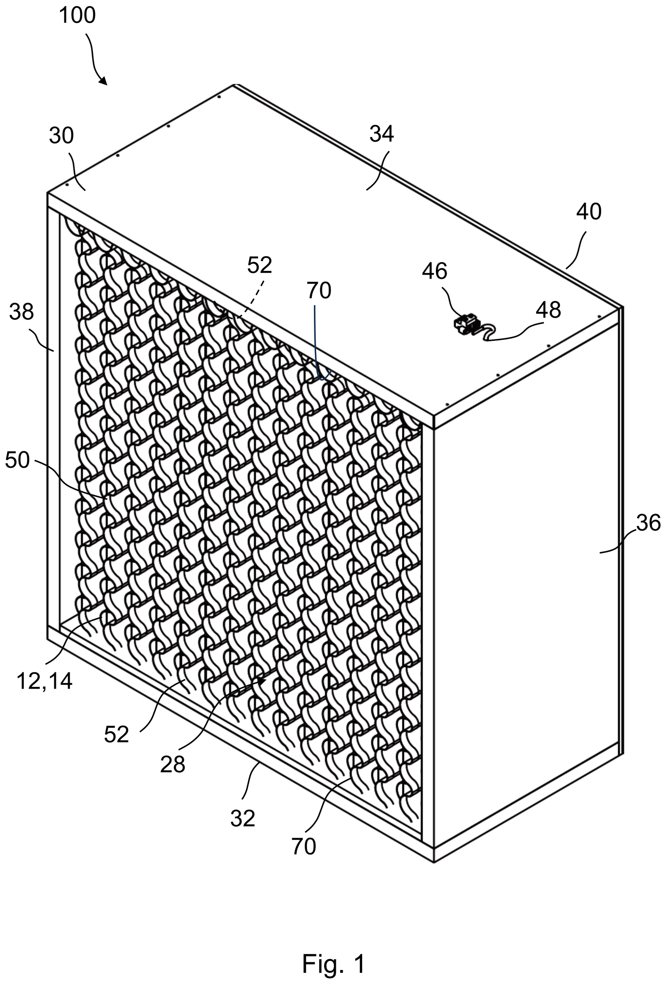

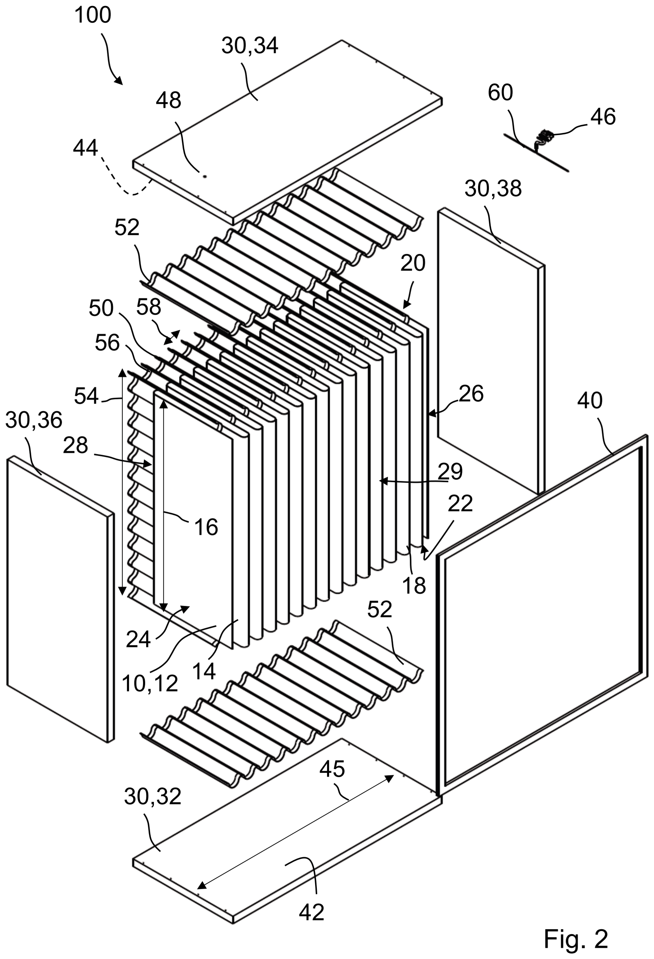

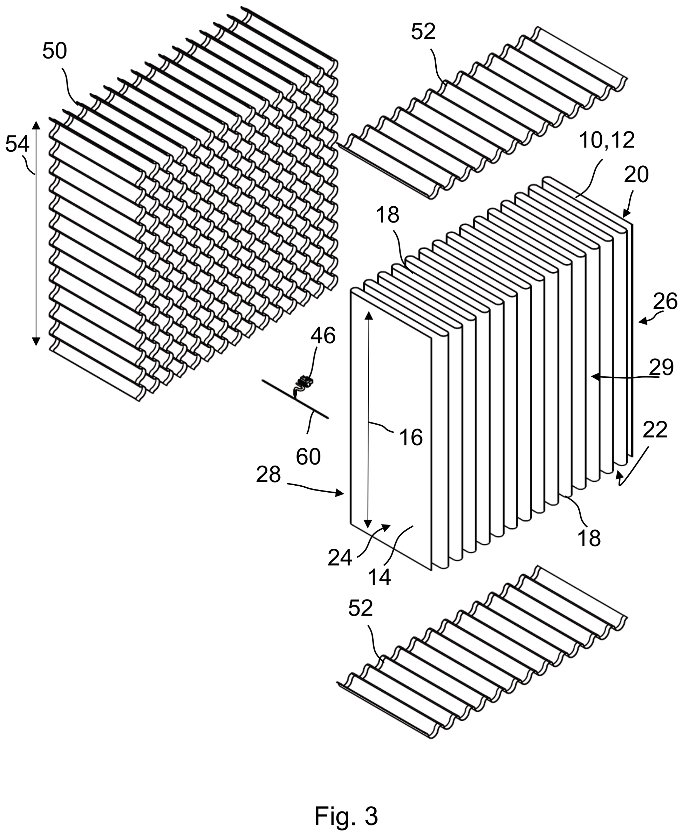

Figure 1 depicts a filter element 100, in particular an air filter element, according to an embodiment of the invention, in an isometric view from a first frontal side 28. In Figure 2 an exploded view of the filter element 100 is shown, whereas in Figure 3 an exploded view of the filter media pack 10 with the separators 50 and sheets 52 are depicted.

The proposed filter element 100 is configured with an aluminium sheet 52 on each side of the filter element 100, which is connected to an earthing wire 60 to ensure complete electrostatic dissipation. Any reference to orientation is merely intended for convenience of description and is not intended in any way to limit the scope of the present invention. Thus, the relative terms "side", "top" and "bottom", as well as derivatives thereof (e.g. "horizontally", etc) should be construed to refer to the orientation as described or as shown in the drawing under discussion. These relative terms are for convenience of description only and do not require that the apparatus be constructed or operated in a particular orientation.

The filter element 100 comprises a filter media pack 10 with folded pleats 14 of a filter medium 12 for filtering fluids, in particular air, by the filter medium 12.

The fluid flow is directed across the filter media pack 10 through one of the frontal sides 28, 29 of the filter media pack 10 to the other frontal side 29, 28 of the filter media pack 10.

The filter element 100 further comprises a frame 30, where the filter media pack 10 is placed. The frame 30 comprises two opposing side components 32, 34, being closed in a rectangular shape by a top component 36 and a bottom component 38 opposite to the top component 36.

The filter frame 30 may be constructed from a number of materials, including but not restricted to galvanized steel, aluminum or stainless steel. The frame 30 may be coated with an anti-corrosive and conductive finish. Integrated grounding terminals 46 are added to dissipate any residual static electricity.

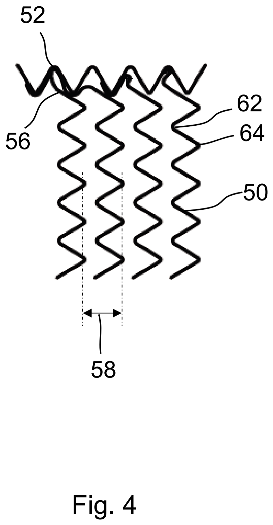

Electrically conductive corrugated separators 50 are placed between adjacent pleats 14 of the filter media pack 10 from an upstream and/or downstream side 28, 29 of the pleats 14, provided for a uniform spacing of adjacent pleats 14. Hereby, the corrugated separators 50 are oriented in a way between the pleats 14 that fluid channels are formed along an insertion direction of the separators 50, formed by tips 62 and valleys 64 of the separators 50 (see Figure 4) leading from the first frontal side 28 to the second frontal side 29 of the filter media pack 10.

In Figure 2, the separators 50 are partly inserted between the pleats 14.

Further, at least one electrically conductive sheet 52 is placed on an inner side 42, 44 of at least one of the side components 32, 34, covering a full length 45 of the side component 32, 34. The sheet 52 is affixed to the at least one of the side components 32, 34, respectively, so that the sheet 52 is kept in place.

The separators 50, as well as the sheets 52 may be individually tested to ensure that the maximum measured electrical continuity resistance does not exceed 1 Ohm to ensure safe dissipation of static electricity. If issues are found these can be easily repaired by adjusting the alignment of the separator 50 or the sheet 52.

The embodiment shown in the Figures comprises two sheets 52, one on each of the side components 32, 34. The sheets 52 are formed like a separator 50 and are configured with a corrugated shape. In other words, each sheet 52 is a corrugated separator placed horizontally on its respective side components 32, 34.

In particular, the separators 50 and/or the sheets 52 may be sinusoidally corrugated or folded in a zigzag shape.

The separators 50 and/or the sheets 52 may comprise aluminum. In particular the separators 50 and/or the sheets 52 may be made from aluminum sheets, which are transformed into a sinusoidally corrugated or zigzag folded shape.

In an advantageous embodiment, the aluminium may exhibit a purity of 99,999 %.

Thus, as the separators 50 as well as the sheets 52 are electrically conductive, in the manufactured filter element 100, the separators 50 are in electrical contact with the sheets 52 of the side component 32, 34.

An earthing wire 60 is electrically connected to at least one of the separators 50 at one end 24 of the filter media pack 10. Favorably, the earthing wire 60 may be welded to the separator 50. The earthing wire 60 is routed to a ground terminal 46 integrated into the frame 30. The ground terminal 46 is integrated into one of the side components 34. Thus, the earthing wire 60 is routed through a through-hole 48 in the side component 34.

A length 54 of the corrugated separators 50 extends beyond a width 16 of the pleats 14 at least at one side edge 20, 22 of the filter media pack 10, Thus, when placing the separators 50 in the filter media pack 10, the separators 50 protrude from both side edges 20, 22 of the filter media pack 10. Favorably, an overhang 56 of a separator 50 is greater than a distance 58 between the separator 50 and the adjacent next separator 50. Thus, the overhang 56 may be folded towards the next adjacent separator 50 in order to establish the electrical contact between the two separators 50 as well as to the sheet 52.

Finally, a sealant 70 may be arranged at the inner side 42, 44 of the side components 32, 34, at least covering the corresponding sheet 52 and side edges 20, 22 of the pleats 14 for a safe mechanical fixing of the components, ensuring a high level of safety and durability.

The sealant 70 may favorably comprise a two-way polyurethane sealant as common sealing material.

A gasket 40 may be arranged at the frontal side 29 to the frame 30 for sealing the filter element 100 when being placed in a filter system for a tight fluid flow.

For manufacturing of the filter element 100, at least one electrically conductive sheet 52 is placed on an inner side 42, 44 of one or both of two side components 32, 34 of a frame 30.

The sheet 52 covers a full length 45 of the side component 32, 34, and is affixed to the side component 32, 34.

The filter media pack 10 with the folded pleats 14 of the filter medium 12 is produced.

Then the electrically conductive corrugated separators 50 are placed between adjacent pleats 14 from an upstream and/or downstream side 28, 29 of the pleats 14, provided for a uniform spacing of the pleats 14.

Hereby, as the length 54 of the separators 50 extends beyond a width 16 of the pleats 14, the separators 50 are placed in such a way that the separators 50 protrude from both side edges 20, 22 of the filter media pack 10.

Next, the filter media pack 10 is placed upon a side component 32, 34 of the frame 30 comprising the at least one affixed sheet 52. An overhang 56 of the separators 50 is folded into the sheet 52 affixed to the side component 32, 34.

Then, the second of the two side components 32, 34 is placed to the frame 30. Hereby, the overhang 56 of the separators 50 is folded into the sheet 52 affixed to the second side component 32, 34.

An earthing wire 60 is attached to a separator 50 at least at one end 24, 26 of the filter media pack 10 and welded to the separator 50.

The earthing wire 60 is routed to a ground terminal 46 integrated into the frame 30, in a through-hole 48 of one of the side components 32, 34.

The separators 50, as well as the sheets 52 may be individually tested to ensure that the maximum measured electrical continuity resistance does not exceed 1 Ohm to ensure safe dissipation of static electricity. If issues are found these can be easily repaired by adjusting the alignment of the separator 50 or the sheet 52.

Bottom component 36, and top component 38 are added to the frame 30.

Finally, a sealant 70 is arranged at the inner side 42, 44 of the side components 32, 34, at least covering the corresponding sheets 52 and side edges 20, 22 of the pleats 14.

After the polyurethane of the sealant 70 has set, the separators 50 may be again tested to ensure compliance with the required maximum resistance levels.

For manufacturing, the filter element 100 may be placed as shown in Figure 2 with the two side components 32, 34 in a horizontal orientation and the bottom component 36 and top component 38 in a vertical orientation. Yet, other ways of orienting the components of the filter element 100 may also be advantageous for manufacturing.

Figure 4 depicts a sectional view of separators 50 connected to a sheet 52.

The sheet 52 is corrugated in the same way as the separators 50. Overhangs 56 of the separators 50 are folded into adjacent regions with tips 62 and valleys 64 of the sheet 52. Thus, electrical contact is established between the separators 50 and the sheet 52. For this purpose, the overhang 56 favorably is longer than the distance 58 between two adjacent separators 50.

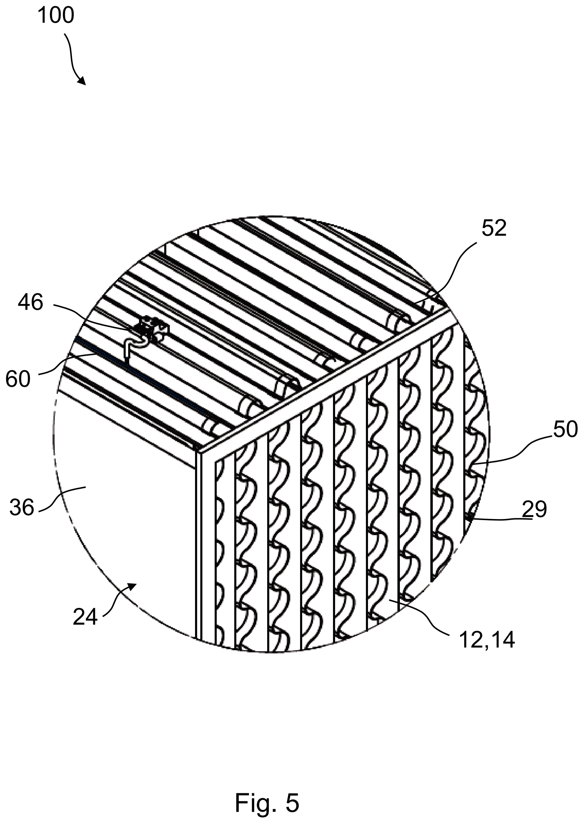

Figure 5 depicts a detailed view of part of the filter element 100 according to Fig. 1 from a second frontal side 29.

In this Figure the second side component 34 is removed from the frame 30 in order to depict the earthing wire 60 being attached to one of the separators 50, the second last separator 50 at the end 24 of the filter media pack 10. The ground terminal 46 is shown being connected to the earthing wire 60. The ground terminal 46 is then appropriately earthed (not shown).

### Reference Numbers

- 10: filter media pack
- 12: filter medium
- 14: pleat
- 16: width
- 18: folded edge
- 20: side edge
- 22: side edge
- 24: end
- 26: end
- 28: frontal side
- 29: frontal side
- 30: frame
- 32: side component
- 34: side component
- 36: bottom component
- 38: top component
- 40: gasket
- 42: inner side
- 44: inner side
- 45: length
- 46: ground terminal
- 48: through-hole
- 50: separator
- 52: sheet
- 54: length
- 56: overhang
- 58: distance
- 60: earthing wire
- 62: tip
- 64: valley
- 70: sealant
- 100: filter element

## Claims

1. A filter element (100) comprising
a filter media pack (10) with folded pleats (14) of a filter medium (12),
a frame (30) enclosing the filter media pack (10) and comprising two opposing side components (32, 34), being closed by a top component (36) and a bottom component (38) opposite to the top component (36),
wherein electrically conductive corrugated separators (50) are placed between adjacent pleats (14) of the filter media pack (10) from an upstream and/or downstream side (28, 29) of the pleats (14), provided for a uniform spacing of adjacent pleats (14),
wherein an electrically conductive sheet (52) is placed on an inner side (42, 44) of at least one of the side components (32, 34),
wherein the separators (50) are in electrical contact with the sheet (52) of the at least one side component (32, 34),
wherein an earthing wire (60) is electrically connected to each electrically conductive sheet (52).

2. The filter element according to claim 1, wherein the separators (50) and/or the sheets (52) are made from aluminum.

3. The filter element according to claim 1 or 2, wherein the sheet (52) is formed like a separator (50), wherein the separators (50) and/or the sheets (52) are sinusoidally corrugated or folded in a zigzag shape.

4. The filter element according to any one of the preceding claims, wherein a length (54) of the corrugated separators (50) extends beyond a width (16) of the pleats (14) at a side edge (20, 22) of the filter media pack (10) corresponding to the side (42, 44) where the at least one electrically conductive sheet (52) is placed, such that the separators (50) protrude from the side edge (20, 22) of the filter media pack (10).

5. The filter element according to any one of the preceding claims, wherein an overhang (56) of a separator (50) is greater than a distance (58) between the separator (50) and the adjacent next separator (50).

6. The filter element according to claim 5, wherein the overhang (56) is folded towards the next adjacent separator (50).

7. The filter element according to any one of the preceding claims, wherein each electrically conductive sheet (52) is of a length that covers a full length (45) of the side component (32, 34) where it is placed.

8. The filter element according to any one of the preceding claims, wherein the earthing wire (60) is welded to each electrically conductive sheet (52) at least at one end (24, 26) of the filter media pack (10).

9. The filter element according to any one of the preceding claims, wherein the earthing wire (60) is routed to a ground terminal (46) integrated into the frame (30),
in particular, wherein the ground terminal (46) is integrated into the side component (32, 34) where the electrically conductive sheet (52) is placed.

10. The filter element according to any one of the preceding claims, wherein a sealant (70) is arranged at the inner side (42, 44) of the side components (32, 34), at least covering the corresponding sheet (52) and side edges (20, 22) of the pleats (14).

11. The filter element according to any one of the preceding claims, wherein the filter element is an air filter element.

12. A method for manufacturing a filter element (100) according to any one of the preceding claims, the method comprising
placing an electrically conductive sheet (52) on an inner side (42, 44) of one or both of two side components (32, 34) of a frame (30);
providing a filter media pack (10) with folded pleats (14) of a filter medium (12);
placing electrically conductive corrugated separators (50) between adjacent pleats (14) from an upstream and/or downstream side (28, 29) of the pleats (14), provided for a uniform spacing of the pleats (14);
placing the filter media pack (10) upon a side component (32, 34) of the frame (30) comprising the sheet (52), so that the separators (50) are in electrical contact with the sheet (52);
adding the second of the two side components (32, 34) to the frame (30), if the second side component (32, 34) comprises a sheet (52), placing the separators (50) in electrical contact with the sheet (52) of the second side component (32, 34);
attaching an earthing wire (60) to each sheet (52) at least at one end (24, 26) of the filter media pack (10).

13. The method according to claim 12, wherein a length (54) of the corrugated separators (50) extends beyond a width (16) of the pleats (14) such that the separators (50) protrude from one or both side edges (20, 22) of the filter media pack (10) corresponding to where the electrically conductive sheet(s) (52) is placed,
wherein placing the separators (50) in electrical contact with the sheet(s) (52) comprises: folding an overhang (56) of the separators (50) at each side edge (20, 22) into the corresponding sheet (52).

14. The method according to claim 12 or 13, further routing the earthing wire (60) to a ground terminal (46) integrated into the frame (30), in particular, integrated into one of the side components (32, 34).

15. The method according to any one of claims 12 to 14, further comprising arranging a sealant (70) at the inner side (42, 44) of the side components (32, 34), at least covering the corresponding sheet (52) and side edges (20, 22) of the pleats (14).
